Europäisches Patentamt

European Patent Office

Office européen des brevets

(19)

(11) Numéro de publication: **0 223 642 B1**

(12) **FASCICULE DE BREVET EUROPEEN**

(45) Date de publication du fascicule du brevet:
**28.12.88**

(51) Int. Cl.⁴: **F 16 D 69/02,** F 16 D 65/12, C 04 B 35/52

(21) Numéro de dépôt: **86402160.5**

(22) Date de dépôt: **02.10.86**

(54) **Matériau composite carbone-carbone pour pièces de friction, et son application aux dispositifs de freinage.**

(30) Priorité: **02.10.85 FR 8514614**

(43) Date de publication de la demande:
**27.05.87 Bulletin 87/22**

(45) Mention de la délivrance du brevet:
**28.12.88 Bulletin 88/52**

(84) Etats contractants désignés:
**FR GB IT**

(56) Documents cités:
**FR-A- 2 257 821**
**GB-A- 2 012 671**
**GB-A- 2 055 776**
**GB-A- 2 099 365**

**CHEMICAL ABSTRACTS, vol. 81, no. 26, Décembre 1974, page 360, résumé no. 175117t, Columbus, Ohio, US; M.L. LIEBERMAN et al.: "Effect of gas phase conditions on resultant matrix pyrocarbons in carbon/carbon composites"**

(73) Titulaire: **SOCIETE EUROPEENNE DE PROPULSION (S.E.P.) Société Anonyme dite:, 24 Rue Salomon de Rothschild, F-92150 Suresnes (FR)**

(72) Inventeur: **Broquere, Bernard, 15 rue Jules Verne, F-33100 Bordeaux (FR)**
Inventeur: **Lacombe, Alain, 21 rue Jean de la Fontaine, F-33600 Pessac (FR)**

(74) Mandataire: **Joly, Jean-Jacques et al, CABINET BEAU DE LOMENIE 55, rue d'Amsterdam, F-75008 Paris (FR)**

# Description

La présente invention concerne les matériaux composites carbone-carbone pour former des pièces de friction telles que, notamment, des disques et patins de freins et pièces de frottement d'embrayage à sec.

Il est bien connu d'utiliser les composites carbone-carbone pour réaliser des éléments de friction. Ces matériaux sont obtenus par densification d'un renfort en fibres de carbone au moyen d'une matrice de carbone. La matrice peut être mise en place au sein du renfort fibreux suivant différents procédés dont, notamment, l'infiltration en phase vapeur (CVI). On pourra, par exemple, se référer à la demande de brevet FR 2 189 207.

Pour l'obtention des meilleures performances possibles en utilisation en frottement, il est généralement considéré qu'un traitement thermique à haute température (THT) doit être effectué sur le matériau après infiltration de la matrice (voir notamment la demande de brevet FR 2 460 350 et le brevet US 3 970 174). Ce traitement THT, généralement effectué à une température d'au moins 2000°C, provoque la graphitisation du carbone et est destiné à apporter, par rapport au carbone non graphité, les avantages suivants:

— un coefficient de frottement légèrement plus élevé et plus stable en température,

— une conductivité thermique plus élevée, d'où une meilleure diffusivité thermique perpendiculairement aux surfaces de frottement avec, par conséquent, une évacuation plus rapide vers l'intérieur du matériau, de la chaleur engendrée sur ces surfaces, et

— une meilleure tenue à l'oxydation devant conduire à une moindre usure par oxydation aux températures élevées.

C'est pourquoi les matériaux composites carbone-carbone destinés à une utilisation en frottement, en particulier pour les disques de frein, sont actuellement soumis en fin d'élaboration à un traitement THT, malgré le coût de cette opération et le fait que la graphitisation affecte les propriétés mécaniques du matériau.

Ces inconvénients du traitement THT ont déjà été notés, et il est proposé dans le brevet US 4 339 021 de réaliser un traitement thermique à une température n'excédant pas 2300°C pour obtenir un indice de cristallinité particulier pour le carbone de la matrice. Même s'il n'est pas conduit à une température très élevée, un traitement thermique final reste donc toujours nécessaire.

Or, et ce de façon tout à fait surprenante, la demanderesse a découvert que, sous certaines conditions, le traitement THT pouvait être évité sans nuire aux performances du matériau dans un large domaine d'utilisation.

Ce résultat est atteint, conformément à l'invention, par le fait que le matériau est constitué de la façon suivante:

— Le renfort fibreux en carbone est formé de couches d'une texture fibreuse qui sont superposées et aiguilletées,

— la matrice carbonée est constituée de pyrocarbone essentiellement de type laminaire rugueux, qui est déposé au sein du renfort par infiltration chimique en phase vapeur, et

— la matrice est conservée dans son état «brut de dépôt», c'est-à-dire qu'elle n'est pas exposée à une température supérieure à sa température de dépôt, ce qui aurait pour effet de provoquer sa graphitisation plus ou moins complète.

Contrairement à ce que l'on pouvait attendre, le matériau composite ainsi obtenu a montré un comportement en frottement satisfaisant, en particulier pour des applications dans lesquelles l'énergie à absorber par les pièces de friction ne dépasse pas de préférence 1000 kJ par kilogramme de matériau de friction, ces applications allant des freins pour véhicules automobiles de compétition (formule 1) aux freins pour avions civils, et incluant notamment les freins pour trains à grande vitesse.

De plus, et toujours de façon inattendue, le matériau composite conforme à l'invention s'use moins rapidement dans les mêmes conditions d'utilisation, que celui ayant subi un traitement final.

S'ajoutent encore les avantages significatifs que constituent l'économie du traitement THT et de meilleures propriétés mécaniques par rapport aux matériaux ayant subi une graphitisation.

Les caractéristiques et avantages de l'invention ressortiront à la lecture de la description détaillée donnée ci-après.

Dans cette description, référence sera faite aux dessins annexés sur lesquels:

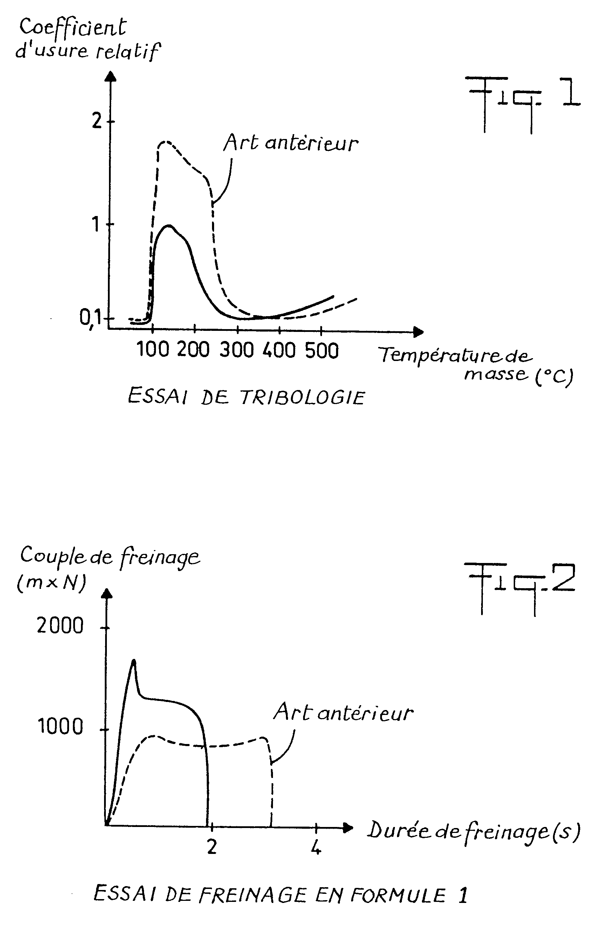

la figure 1 illustre la variation de l'usure mesurée en fonction de la température de masse du matériau composite, cette température étant maintenue constante au cours de chaque frottement, au cours d'essais de tribologie réalisés avec un matériau de l'art anterieur et avec un matériau selon l'invention; et

la figure 2 illustre la relation entre le couple de freinage et la durée de freinage avec un dispositif de freinage d'un véhicule automobile de compétition en formule 1 utilisant un matériau composite de l'art antérieur, et avec un dispositif de freinage similaire utilisant un matériau composite selon l'invention.

Une des caractéristiques de l'invention consiste dans l'utilisation d'un renfort réalisé par aiguilletage de couches fibreuses superposées.

Des procédés de réalisation de renforts fibreux par aiguilletage sont décrits dans les demandes de brevet FR 2 584 106 et FR 2 584 107. Ces procédés consistent à superposer des couches d'une texture fibreuse bidimensionnelle soit par empilement de couches planes formées par des tronçons de bande, soit par enroulement d'une bande sur elle-même autour d'un mandrin. Au fur et à mesure de leur empilement ou superposition, les couches sont aiguilletées sur une profondeur égale à l'épaisseur de plusieurs couches. L'aiguilletage est réalisé avec une densité constante dans tout le renfort fibreux en faisant varier la distance entre les aiguilles et le support du renfort fibreux tout le long de l'élaboration de celui-ci.

Le matériau de renfort fibreux aiguilleté est utilisé pour réaliser une préforme voisine de la forme de la pièce à réaliser. Ainsi, pour la fabrication de disques de frein, on découpe des anneaux dans le renfort fibreux parallélépipédique formé par empilement et aiguilletage de couches planes ou dans le renfort fibreux cylindrique formé par bobinage et aiguilletage d'une bande. Dans le premier cas, l'épaisseur du renfort est choisie en fonction de celle des disques à réaliser tandis que, dans le deuxième cas, ce sont les diamètres intérieur et extérieur du renfort qui sont choisis en fonction de ceux des disques à réaliser.

L'opération d'aiguilletage ne peut pas être effectuée sur des fibres de carbone car celles-ci se briseraient. Aussi, pour réaliser une préforme aiguilletée en fibres de carbone, on part de fibres d'un précurseur du carbone, on réalise une texture fibreuse bidimensionnelle (tissu, voile de carde, nappe de câbles, .....), on assemble par aiguilletage des couches superposées de cette texture, et on réalise la préforme avant de transformer le précurseur en carbone. Comme précurseur, on utilise avantageusement un polyacrylonitrile (PAN) à l'état pré-oxydé. Le précurseur est transformé en carbone par chauffage en atmosphère inerte à une température d'au moins 800°C.

De préférence, le taux volumique de fibres dans la préforme ainsi obtenue, c'est-à-dire le poucentage du volume de la préforme occupé par les fibres, est compris entre 20 et 30%. On retrouve sensiblement le même taux volumique de fibres dans le matériau final.

La densification de la préforme est réalisée par infiltration de pyrocarbone. Comme cela est bien connu en soi, celle-ci est effectuée dans un four sous vide à partir d'un gaz, tel que le méthane, se dissociant sous l'effet de la chaleur.

Il est connu que, selon les conditions d'infiltration, différents types de pyrocarbone peuvent être déposés qui sont caractérisés par leur microstructure: laminaire lisse (LL), laminaire rugueux (LR), isotrope (I). Les différentes microstructures de pyrocarbone sont décrites dans un article de Loll et al publié dans «Carbon», 1977, 15 (6), p. 383-390.

Selon une caractéristique essentielle de l'invention, la matrice est formée par du pyrocarbone laminaire rugueux, l'infiltration étant réalisée en plusieurs étapes successives pour atteindre, de préférence, un pourcentage de pyrocarbone déposé au moins égal à 55% du volume du matériau. L'homme de métier connaît les conditions d'infiltration à respecter pour obtenir ce type de pyrocarbone par l'infiltration chimique en phase vapeur. In faut travailler sous une faible pression partielle d'hydrocarbure gazeux, généralement inférieure à 100 torrs (soit inférieure à $1,33 \cdot 10^4$ N/m²) et à une température relativement modérée, généralement comprise en 900 et 1100°C.

On peut noter ici que ce sont généralement des matrices de pyrocarbone de type laminaire rugueux qui sont déposées pour réaliser des matériaux composites carbone-carbone destinés à subir un traitement THT de graphitisation selon l'art antérieur. La raison tient à ce que la structure laminaire rugueuse est celle qui donne les caractéristiques les plus graphitiques après traitement THT, comme indiqué par Lieberman et al dans un article paru dans «Carbon» 1974, 12 (3), p 233-241.

Toutefois, dans le cas de la présente invention, la microstructure laminaire rugueuse n'est pas choisie pour obtenir les caractéristiques les plus graphitiques puisque, selon une caractéristique essentielle de l'invention, le matériau obtenu après densification par dépôt de la matrice ne subit par la suite aucun traitement à une température supérieure à sa température de densification en sorte que sa matrice reste à l'état «brut de dépôt».

Le matériau conforme à l'invention est parfaitement identifiable par l'homme de l'art. La texture aiguilletée apparaît de façon très caractéristique sur des coupes micrographiques effectuées suivant un plan contenant la direction d'aiguilletage.

La microstructure LR se distingue très nettement, par son aspect sur les micrographies, des autres microstructures LL et I que peut présenter une matrice de pyrocarbone. Il n'y a d'autre part pas de confusion possible avec d'autres formes de carbone provenant par exemple de la carbonisation de résines ou de brai. Enfin, l'état «brut de dépôt» de la matrice pyrocarbone de type LR se distingue de son état après traitement THT par le fait que la distance C/2 entre plans graphitiques de sa structure cristalline, qui se mesure par diffraction de rayons X d'une façon bien connue, est supérieure ou égale à 0,342 nm; le traitement THT a pour effet de réduire cette distance jusqu'à une valeur voisine de 0,336 nm.

Comme le montrent les exemples donnés ci-après, le matériau obtenu selon l'invention présente un très bon comportement en friction, malgré une diffusivité thermique plus basse que celle du matériau ayant subi un traitement final THT.

Le matériau selon l'invention convient plus particulièrement pour des applications en frottement dans lesquelles l'énergie absorbée par masse des pièces de friction ne dépasse pas environ 1000 kJ/kg. Ceci correspond approximativement à une température adiabatique maximale d'environ 750°C (par température adiabatique, on entend ici la température qui serait uniformément atteinte au sein du matériau en l'absence d'échanges thermiques avec le milieu environnant).

*Exemple 1*

Des essais de tribologie ont été réalisés avec des matériaux composites obtenus comme suit.

Une structure fibreuse bidimensionnelle est d'abord réalisée par formation de nappes de câbles en fibres PAN pré-oxydées, étalage-nappage d'une nappe sur une autre pour former trois couches avec des câbles orientés dans trois directions différentes, et pré-aiguilletage. Des bandes de cette texture fibreuse sont empilées sur un support et aiguilletées au fur et à mesure de leur empilement. L'aiguilletage est réalisé sur une profondeur de plusieurs bandes avec une densité d'aiguilletage constante. A cet effet, après aiguilletage de chaque bande, le support de l'empilement est écarté par rapport aux aiguilles d'une distance égale à celle de l'épaisseur d'une couche aiguilletée. Un tel procédé est décrit dans la demande de brevet FR 2 584 106 déjà citée.

Des préformes ayant la forme de pièces à réaliser sont découpées dans le renfort fibreux ainsi obtenu, puis soumis à la carbonisation pour transformer le PAN pré-oxydé en carbone. Le taux volumique de fibres dans les préformes obtenues est d'environ 25%.

Ensuite, du pyrocarbone laminaire rugueux est introduit au sein des préformes par infiltration en phase vapeur. Le pyrocarbone est déposé par cracking d'un gaz naturel, constitué principalement de méthane, sous une pression absolue de 50 torrs (environ 6,7 · $10^3$ N/m$^2$) à une température de 1050°C. L'infiltration est conduite en plusieurs cycles successifs, avec écroutages intermédiaires, jusqu'à obtenir une densité d'environ 1,75, les écroutages consistant à éliminer la couche superficielle afin d'éviter une obstruction de la porosité de surface qui s'opposerait au dépôt du pyrocarbone au coeur du matériau.

Afin de réaliser des essais comparatifs, une partie des produits densifiés est soumise à un traitement final THT à une température de 2200°C pour réaliser la graphitisation du carbone de la matrice, conduisant ainsi à l'obtention de produits en matériau composite carbone-carbone selon l'art antérieur.

Plusieurs essais ont été réalisés en utilisant trois pions ayant une surface frottante de 15 × 30 mm et un disque, les pions et le disque étant réalisés en un même matériau composite carbone-carbone. La durée de chaque essai était 30 minutes au cours desquelles la température de masse du matériau du disque était maintenu à une valeur prédéterminée en utilisant des moyens de refroidissement commandés. Les pions étaient appliqués sur le disque le long d'une piste ayant un diamètre moyen de 250 mm, sous une pression de contact de 5 bars (5 × $10^5$ N/m$^2$), la vitesse linéaire de disque le long de la piste de frottement étant 5 m/s.

Pour différentes températures du matériau composite, l'usure a été mesurée. Les résultats sont illustrés par la figure 1. Le trait plein représentant les résultats obtenus avec le matériau composite selon l'invention et les tirets représentent les résultats obtenus avec le matériau composite selon l'art antérieur ayant subi le traitement THT. Sur la figure 1, les valeurs du coefficient d'usure indiquées sont des valeurs relatives évaluées par rapport à la valeur maximale obtenue avec le matériau selon l'invention.

La figure 1 montre une diminution inattendue de l'usure par rapport à l'art antérieur, cette diminution étant tout à fait significative dans le domaine des températures relativement basses, c'est-à-dire le domaine des énergies à absorber relativement faibles.

*Exemple 2*

D'autres essais ont été réalisés au moyen d'un disque stator et d'un disque rotor ayant des diamètres extérieur et intérieur égaux respectivement à 54 mm et 30 mm, la surface de frottement étant approximativement égale à 15,6 cm$^2$.

Une première série d'essais a été effectuée avec des disques en un matériau A selon l'invention obtenu comme dans l'exemple 1, et une deuxième série d'essais a été réalisée avec des disques en un matériau B selon l'art antérieur et obtenu comme dans l'exemple 1.

Chaque série d'essais comprenait des essais réalisés à différents niveau d'énergie, à savoir:

I: niveau d'énergie à absorber, par masse de matériau de friction, inférieure à 200 kJ par kg,
II: niveau d'énergie compris entre 300 et 600 kJ/kg,
III: niveau d'énergie compris entre 800 et 1000 kJ/kg.

Chaque essai comprenait 500 cycles de freinage, les cycles de freinage successifs étant séparés les unes des autres par un intervalle de temps suffisant pour permettre le refroidissement du matériau.

Le coefficient de frottement et l'usure mesurés sont donnés dans le tableau suivant:

| | coeff. d'usure relatif: | | | coeff. de frottement | | |
|---|---|---|---|---|---|---|
| Niveau d'énergie | I | II | III | I | II | III |
| Matériau A (invention) | 1 | 1 | 4 | 0,35 | 0,39 | 0,39 |
| Matériau B (art antérieur) | 8 | 1 | 3 | 0,39 | 0,41 | 0,40 |

Il ressort que si le coefficient de frottement obtenu avec le matériau selon l'invention est sensiblement du même ordre que celui obtenu avec le matériau de l'art antérieur, une diminution significative de l'usure est observée pour des niveaux d'énergie relativement bas.

*Exemple 3*

Des essais ont été réalisés avec des ensembles de freinage multidisques bi-rotors pour avions civils, les dimensions des disques dans chaque ensemble étant les suivantes:

| | Disques rotors | Disque stator central | Disques stators latéraux |
|---|---|---|---|
| Diamètre extérieur (mm) | 451 | 419 | 419 |
| Diamètre intérieur (mm) | 281 | 249 | 249 |
| Epaisseur (mm) | 19 | 22 | 16 |

Trois différents ensembles de freinage ont été réalisés avec les mêmes matériaux A (invention) et B (art antérieur) que dans les exemples 1 et 2:
Ensemble 1: tous les disques réalisés en matériau A,
Ensemble 2: tous les disques réalisés en matériau B,
Ensemble 3: les disques rotors réalisés en matériau A et les disques stators réalisés en matériau B.

Les trois ensembles ont été soumis aux mêmes essais au banc comprenant:

— une phase de simulation de «taxiage» à froid (roulage avant décollage) comprenant une suite de freinages avec application d'énergies allant de 10 à 100 kJ par kg de matériau de friction,

— une phase de simulation de freinage à l'atterrissage avec aplication d'une énergie d'environ 400 kJ/kg, et

— une phase de simulation de «taxiage» à chaud (roulage après atterrissage) comprenant une suite de freinages avec application d'énergies allant de 10 à 100 kJ/kg.

Les résultats obtenus sont résumés dans le tableau ci-après:

| | Coefficient d'usure (par rapport à l'ensemble 2): | Coefficient de frottement |
|---|---|---|
| Ensemble 1 | 0,66 | 0,27 |
| Ensemble 2 | 1 | 0,28 |
| Ensemble 3 | 0,62 | 0,25 |

Il est tout à fait apparent que le matériau selon l'invention, que ce soit en frottement sur lui-même ou en frottement sur le matériau qui a subi le traitement final THT, s'use nettement moins que le matériau ayant subi le traitement final THT en frottement sur lui-même.

On peut noter ici que, dans tous les essais réalisés, l'usure a été déterminée par mesure de la diminution d'épaisseur totale des pièces en frottement mutuel.

### Exemple 4

Des ensembles de freinage du type disque-patins ont été réalisés pour des véhicules automobiles de compétition en formule 1, les disques ayant des diamètres extérieur et inférieur respectivement égaux à 280 mm et 150 mm et une épaisseur de 16 mm, et les patins recouvrant des secteurs angulaires de 45° à 120° sur chaque face du disque, selon les performances souhaitées.

Des ensembles de freinage réalisés avec le matériau A obtenu comme dans l'exemple 1 ont apporté toutes satisfactions, ayant été effectivement utilisés en compétition en formule 1. Le coefficient de frottement obtenu se situe entre 0,35 et 0,50 pour des niveau d'énergie allant de 300 kJ/kg à 600 kJ/kg. Il est également apparu que le maximum du coefficient de frottement est obtenu pratiquement instantanément avec le déclenchement de l'action de freinage, ce qui fait que la décélération maximale souhaitée est immédiatement obtenue, autorisant un freinage plus tardif et plus bref. Un tel résultat n'est pas obtenu avec des ensembles de freinage similaires utilisant un matériau composite ayant subi un traitement final THT. Cette différence est illustrée par la figure 2 où les lignes pleines et en tirets représentent la variation du couple de freinage en fonction de la durée de freinage respectivement avec le matériau selon l'invention et avec le matériau selon l'art antérieur.

### Exemple 5

D'autres ensembles de freinage du type disque-patins ont été réalisés, ces ensembles étant destinés à être utilisés dans des trains à grande vitesse et ayant une structure telle que décrite dans la demande de brevet FR 2 557 240.

De tels ensembles de freinage sont destinés à être utilisés dans un domaine très étendu d'énergie appliquée au pièces de friction, domaine pouvant aller de 20 à 1000 kJ/kg. De plus, la décélération souhaitée est relativement faible en valeur absolue (environ 1,3 m/s$^2$) et la durée de freinage est relativement longue (une minute ou plus). Bien que ces conditions d'utilisation soient très différentes de celles rencontrées en compétition en formule 1 (décélération de 20 m/s$^2$ ou plus et durée de freinage de 2s ou moins), le matériau A selon l'invention a prouvé d'excellents résultats au cours d'un essai au banc: coefficient de frottement élevé (environ 0,30) et bonne stabilité et reproductibilité du coefficient de frottement pour des niveau d'énergie supérieurs à 200 kJ/kg.

### Exemple comparatif 6

Des essais semblables à ceux de l'exemple 2 ont été effectués avec un matériau de friction C différent du matériau A de l'exemple 1 en ce que la matrice était formée de pyrocarbone du type laminaire lisse laissée en son état «brut de dépôt». Le frottement s'est avéré instable, avec production de vibrations importantes dans la machine d'essai. De plus, l'usure du matériau C était plus du double de celle mesurée avec le matériau A selon l'invention, dans les mêmes conditions d'utilisation.

### Revendications

1. Matériau composite carbone-carbone pour pièces de friction, comprenant un renfort fibreux en carbone formé de couches d'une structure fibreuse qui sont superposées et aiguilletées, et une matrice carbonée déposée au sein du renfort fibreux par infiltration chimique en phase vapeur de pyrocarbone, caractérisé en ce que la matrice est formée par du pyrocarbone de type laminaire rugueux et est conservée dans son état «brut de dépôt».

2. Matériau selon la revendication 1, caractérisé en ce que la structure fibreuse utilisée pour réaliser le renfort est obtenue à partir de fibres en polyacrylonitrile.

3. Matériau selon l'une quelconque des revendications 1 et 2, caractérisé en ce que le pyrocarbone est déposé jusqu'à représenter au moins 55% du volume du matériau.

4. Matériau selon l'une quelconque des revendications 1 à 3, caractérisé en ce que le taux volumique de fibres dans le matériau est compris entre 20 et 30%.

5. Dispositif de freinage comportant au moins deux pièces de friction en matériau composite carbone-carbone entre elles, caractérisée en ce que l'une au moins des deux pièces de friction est en un matériau selon l'une quelconque des revendications 1 à 4.

6. Dispositif selon la revendication 5, caractérisé en ce que l'autre des deux pièces de friction est en matériau composite carbone-carbone réalisé par infiltration en phase vapeur de pyrocarbone au sein d'un renfort fibreux en carbone suivie d'un traitement thermique à haute température pour transformer le carbone en graphite.

7. Dispositif de freinage comportant au moins deux pièces de friction en matériau composite carbone-carbone coopérant entre elles, caractérisé en ce que les pièces de friction sont en un matériau selon l'une quelconque des revendications 1 à 4.

## Claims

1. Carbon-carbon composite material for friction parts, said material comprising a carbon fiber reinforcement composed of layers of a fibrous structure which are superposed and needled, and a matrix of pyrolytic carbon of the rough laminar type deposited inside the carbon fiber reinforcement by chemical vapor deposition, characterized in that the matrix is formed by rough laminar pyrolytic carbon and is kept in its «as deposited» state.

2. Material according to claim 1, characterized in that the fibrous structure used for obtaining the carbon fiber reinforcement is obtained from polyacrylonitrile fibers.

3. Material according to any one of claims 1 and 2, characterized in that the pyrolytic carbon is deposited so as to represent at least 55% of the volume of the material.

4. Material according to any one of claims 1 to 3, characterized in that the volume ratio of fibers in the material is comprised between 20 and 30%.

5. Braking assembly comprising at least two friction parts in carbon-carbon composite material characterized in that at least one of said two friction parts is in a material according to any one of claims 1 to 4.

6. Braking assembly according to claim 5, characterized in that the other of the two friction parts is made of a carbon-carbon composite material having a carbon matrix produced by chemical vapour infiltration of pyrolytic carbon followed by a very high temperature treatment for graphitizing the carbon.

7. Braking assembly comprising at least two friction parts in carbon-carbon composite material, which cooperate with each other, characterized in that the friction pieces are in a material according to any one of claims 1 to 4.

## Patentansprüche

1. Kohlenstoff-Kohlenstoff-Verbundwerkstoff für Friktionsteile, aufweisend eine faserstoffhaltige Verstärkung aus Kohlenstoff, gebildet aus Schichten einer faserstoffhaltigen Struktur, die übereinander angeordnet und genadelt sind und eine kohlenstoffhaltige Matrix, abgelagert im Inneren der faserstoffhaltigen Verstärkung durch chemische Infiltration mit Pyrokohlenstoff-Dampfphase, dadurch gekennzeichnet, dass die Matrix durch Pyrokohlenstoff vom laminaren rauhen Typ gebildet ist und in ihrem «Rohablagerungs»-Zustand gehalten ist.

2. Werkstoff nach Anspruch 1, dadurch gekennzeichnet, dass die zur Ausführung der Verstärkung verwendete faserstoffhaltige Struktur ausgehend von Fasern aus Polyacrylnitril erhalten wird.

3. Werkstoff nach einem beliebigen der Ansprüche 1 und 2, dadurch gekennzeichnet, dass der Pyrokohlenstoff abgelagert wird, bis er wenigstens 55% des Volumens des Werkstoffes darstellt.

4. Werkstoff nach einem beliebigen der Ansprüche 1 bis 3, dadurch gekennzeichnet, dass das Volumenverhältnis von Fasern im Werkstoff enthalten ist zwischen 20 und 30%.

5. Bremsvorrichtung, umfassend wenigstens zwei mit einander zusammenwirkende Friktionsteile aus Kohlenstoff-Kohlenstoff-Verbundwerkstoff, dadurch gekennzeichnet, dass das eine wenigstens der beiden Friktionsteile aus einem Material gemäss einem beliebigen der Ansprüche 1 bis 4 ist.

6. Vorrichtung nach Anspruch 5, dadurch gekennzeichnet, dass das andere der beiden Friktionsteile aus einem Kohlenstoff-Kohlenstoff-Verbundwerkstoff ist, ausgeführt durch Infiltration mit Pyrokohlenstoff-Dampfphase im Inneren einer faserstoffhaltigen Verstärkung aus Kohlenstoff, gefolgt von einer Wärmebehandlung mit hoher Temperatur, um den Kohlenstoff in Graphit umzuwandeln.

7. Bremsvorrichtung umfassend wenigstens zwei miteinander zusammenwirkende Friktionsteile aus Kohlenstoff-Kohlenstoff-Verbundwerkstoff, dadurch gekennzeichnet, dass die Friktionsteile aus einem Material gemäss einem beliebigen der Ansprüche 1 bis 4 sind.

Fig. 1

Coefficient d'usure relatif

Art antérieur

2

1

0,1

100 200 300 400 500 Température de masse (°C)

ESSAI DE TRIBOLOGIE

Fig. 2

Couple de freinage (m × N)

2000

1000

Art antérieur

2    4    Durée de freinage (s)

ESSAI DE FREINAGE EN FORMULE 1